(19) Europäisches Patentamt
European Patent Office
Office européen des brevets

(11) **EP 4 091 790 A1**

(12) # EUROPEAN PATENT APPLICATION

(43) Date of publication:
**23.11.2022 Bulletin 2022/47**

(21) Application number: **21305650.0**

(22) Date of filing: **18.05.2021**

(51) International Patent Classification (IPC):
**B29C 45/26** *(2006.01)*    **B29C 45/56** *(2006.01)*
**B29D 11/00** *(2006.01)*

(52) Cooperative Patent Classification (CPC):
**B29D 11/00326; B29C 45/2675; B29C 45/561;**
**B29D 11/00432; B29D 11/0048;** B29L 2011/0016

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **ESSILOR INTERNATIONAL**
**94220 Charenton-Le-Pont (FR)**

(72) Inventors:
• **FRENCH, Elliot**
**Charlton, MA 01507 (US)**
• **CHIU, Hao Wen**
**Holden, 01520 (US)**

(74) Representative: **Jacobacci Coralis Harle**
**32, rue de l'Arcade**
**75008 Paris (FR)**

(54) ## METHOD AND DEVICE FOR OPTICAL LENS FABRICATION

(57)    A mold device includes a mold including a first mold side (110) and a second mold side (105) having a lower thermal conductivity than the first mold side (110), the first mold side (110) including a first mold insert (117) disposed on a surface of the first mold side (110), the first mold insert (117) including a plurality of inverted microstructures (199) formed thereon, the plurality of inverted microstructures (199) disposed according to a predetermined layout, wherein a thermal conductivity of the first mold side (110) is 5 to 1,500 $W \cdot m^{-1} \cdot K^{-1}$ at 25°C, and a thermal conductivity of the second mold side (105) is 0.01 to 2 $W \cdot m^{-1} \cdot K^{-1}$ at 25°C.

FIG. 5A

EP 4 091 790 A1

**Description**

<u>FIELD</u>

The present disclosure relates to a device and method for reducing defects during fabrication of lenses, including lenses having microstructures thereon.

<u>BACKGROUND</u>

The background description provided herein is for the purpose of generally presenting the context of the disclosure. Work of the presently named inventors, to the extent the work is described in this background section, as well as aspects of the description that may not otherwise qualify as prior art at the time of filing, are neither expressly nor impliedly admitted as prior art against the present disclosure.

Glass inserts can be used during injection molding to fabricate lenses that are free of defects, such as "weld line" and "center distortion" defects. Glass inserts are more adept at preventing such defects due to having lower thermal conductivity. This property helps preserve the heat of an injected polymer melt, which then helps "heal" weld line defects by prolonging the cooling of the polymer melt and preventing distortion due to uneven shrinkage.

However, fabrication of lenses having microstructures (e.g. for myopia control) may require the use of a mold insert having a microstructured surface that is less feasible to achieve on glass due to technological or economic reasons. Thus, a device and method for lens fabrication via injection molding with a high thermal conductivity mold insert are desired for producing lenses with good optics, good replication of the microstructured surface, and reduced occurrence of the aforementioned defects.

Aspects of the disclosure may address some of the above-described shortcomings in the art, particularly with the solutions set forth in the claims.

<u>SUMMARY</u>

The present disclosure relates to a mold device, including a mold including a first mold side and a second mold side, the first mold side including a first mold insert disposed on a surface of the first mold side, the second mold side including a second mold insert disposed on a surface of the second mold side, the second mold insert having a lower thermal conductivity than the first mold insert, the first mold insert including a plurality of inverted microstructures formed thereon, the plurality of inverted microstructures disposed according to a predetermined layout, wherein a thermal conductivity of the first mold insert is 5 to 1,500 $W·m^{-1}·K^{-1}$ at 25°C, and a thermal conductivity of the second mold insert is 0.01 to 2 $W·m^{-1}·K^{-1}$ at 25°C.

The present disclosure additionally relates to a molding method, including coupling a first mold side of a mold and a second mold side of the mold, the first mold side including a first mold insert disposed on a surface of the first mold side, the second mold side including a second mold insert disposed on a surface of the second mold side, the second mold insert having a lower thermal conductivity than the first mold insert, the first mold insert including a plurality of inverted microstructures formed thereon, the plurality of inverted microstructures disposed according to a predetermined layout, the first mold insert and the second mold insert forming a cavity when coupled, the first mold insert and the second mold insert being separated by a first predetermined gap; injecting a first predetermined volume of a polymer melt into the cavity; and closing the first mold insert and the second mold insert at a predetermined closing rate.

Note that this summary section does not specify every feature and/or incrementally novel aspect of the present disclosure or claimed invention. Instead, this summary only provides a preliminary discussion of different embodiments and corresponding points of novelty. For additional details and/or possible perspectives of the embodiments, the reader is directed to the Detailed Description section and corresponding figures of the present disclosure as further discussed below.

<u>BRIEF DESCRIPTION OF THE DRAWINGS</u>

Various embodiments of this disclosure that are proposed as examples will be described in detail with reference to the following figures, wherein:

FIG. 1 shows an exemplary cross-sectional schematic of an exemplary prescription lens, within the scope of the present disclosure.

FIG. 2 shows an exemplary schematic of a mold insert including a plurality of microstructures formed thereon, within the scope of the present disclosure.

FIG. 3A shows an exemplary schematic of a mold cavity including a fan gate, within the scope of the present disclosure.

FIG. 3B shows an exemplary schematic of a mold cavity including a narrow gate, within the scope of the present disclosure.

FIG. 4A shows an exemplary schematic of a mold cavity including no wells, within the scope of the present disclosure.

FIG. 4B shows an exemplary schematic of a mold cavity including wells, within the scope of the present disclosure.

FIG. 5A shows an exemplary schematic of a straight injection molding process, within the scope of the present disclosure.

FIG. 5B shows a series of optical images of the polymer melt 120 injected into the cavity of the mold device for the straight injection process, within the scope of the present disclosure.

FIG. 6 shows an exemplary schematic of a first injection compression molding process, within the scope of the present disclosure.

FIG. 7 shows an exemplary schematic of a second injection compression molding process, within the scope of the present disclosure.

FIG. 8 shows a graph of the E:C ratio as a function of the fill volume, within the scope of the present disclosure.

FIG. 9 shows a series of optical images of the polymer melt 120 injected into the cavity of the mold device for the first injection compression molding process, within the scope of the present disclosure.

FIG. 10 shows optical images of weld line defect conditions, within the scope of the present disclosure.

FIG. 11A shows an optical image of a center of a lens produced with a normal packing rate, within the scope of the present disclosure.

FIG. 11B shows a Keyence microscopy image of the center of the lens of FIG. 11A, within the scope of the present disclosure.

FIG. 12A shows a graph of an injection molding screw velocity profile as a function of the screw position in the polymer injector, within the scope of the present disclosure.

FIG. 12B shows a graph of an injection molding screw velocity profile as a function of time for the same polymer injection cycle represented in FIG. 12A, within the scope of the present disclosure.

FIG. 13 shows an optical image of a lens having good (low) distortion, within the scope of the present disclosure.

FIG. 14 is an exemplary flow chart for a method of forming a lens, within the scope of the present disclosure.

## DETAILED DESCRIPTION

The following disclosure provides many different variations, or examples, for implementing different features of the provided subject matter. Specific examples of components and arrangements are described below to simplify the present disclosure. These are, of course, merely examples and are not intended to be limiting nor inoperable together in any permutation. Unless indicated otherwise, the features and embodiments described herein are operable together in any permutation. For example, the formation of a first feature over or on a second feature in the description that follows may include embodiments in which the first and second features are formed in direct contact, and may also include embodiments in which additional features may be formed between the first and second features, such that the first and second features may not be in direct contact. In addition, the present disclosure may repeat reference numerals and/or letters in the various examples. This repetition is for the purpose of simplicity and clarity and does not in itself dictate a relationship between the various embodiments and/or configurations discussed. Further, spatially relative terms, such as "top," "bottom," "beneath," "below," "lower," "above," "upper" and the like, may be used herein for ease of description to describe one element or feature's relationship to another element(s) or feature(s) as illustrated in the figures. The spatially relative terms are intended to encompass different orientations of the device in use or operation in addition to the orientation depicted in the figures. Inventive apparatuses may be otherwise oriented (rotated 90 degrees or at other orientations) and the spatially relative descriptors used herein may likewise be interpreted accordingly.

The order of discussion of the different steps as described herein has been presented for clarity sake. In general, these steps can be performed in any suitable order. Additionally, although each of the different features, techniques, configurations, etc. herein may be discussed in different places of this disclosure, it is intended that each of the concepts can be executed independently of each other or in combination with each other. Accordingly, the present disclosure can be embodied and viewed in many different ways.

As previously mentioned, weld line and center distortion defects can occur during the molding process for lenses due to the increased cooling of an injected polymer melt. In general, weld lines can be formed during injection when an advancing polymer melt front meets another melt front, which can originate from filling a cavity of the mold from multiple gates. As such, this can lead to head-on impingement of separate flow fronts of the polymer melt, or splitting and converging of flow fronts due to presence of obstacles or excess transversal part thickness variation.

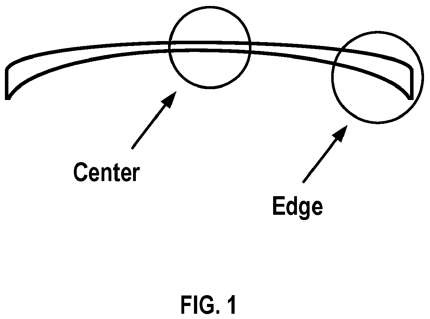

FIG. 1 shows an exemplary cross-sectional schematic of an exemplary prescription lens, useful within the scope of the present disclosure. For the injection molding of the prescription lens with negative powers, weld line formation can occur because the geometry of the desired lens is thin at the center and progressively thicker toward an edge of the lens. For example, the lens in FIG. 1 can illustrate a -2.75D lens having a thinner center and thicker edges.

As the cavity of the mold is filled with viscous molten plastic, a flow pattern can be formed including particular points of interest for determining and describing properties of the polymer melt during molding. For example, a first point (P1) can describe a direction of the center flow front during filling. A second point (P2) can describe the direction of the outer flow front during fill. Notably, the Poiseuille equation can be used to determine a velocity at each point along the flow front. The Poiseuille equation can be given as:

$$U = \frac{\Delta P \times H^2}{8 \times \mu \times \ell} \qquad (1)$$

The equation shows the velocity ($U$) is strongly dependent on the thickness ($H$). This is the main reason why the flow around the edge has a higher velocity to account for the pattern of the flow. Additionally, the velocity is dependent on the viscosity ($\mu$). If the center of the lens cavity is thin enough, then the melt front of the first (central) point (P1) will cool relative to the outer melt front of the second point (P2) causing the viscosity ($\mu$) to be higher in the center (P1) versus the edge (P2).

Eventually a weld line having a length is created as the cavity is full where the flow front meets from each side. If the temperature of the melt at the interface of the insert's surface is held above the glass transition temperature (Tg) for a predetermined length of time, then the weld line can fuse together and disappear. The mold insert's thermal conductivity and thermal diffusivity can determine this time. During injection molding, the inserts are set at a temperature below the injected polymer's Tg so that the lens can sufficiently cool to a rigid state within a reasonable time. For glass, the thermal conductivity is low enough that the polymer is maintained above its Tg at this interface for a sufficient length of time to fuse the weld line and eliminate the defect. However, for a metal insert, thermal conductivity is much higher and the polymer is immediately quenched to the temperature of the metal insert. Furthermore, for some injection molding cycles, the insert temperature is set below Tg and the weld line may not have time to fuse.

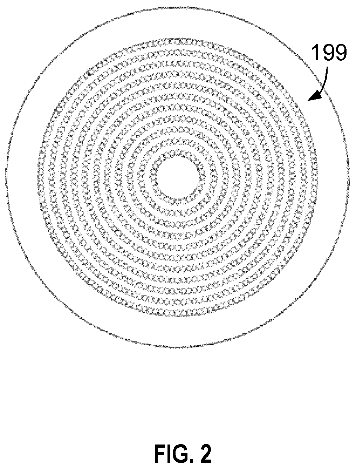

FIG. 2 shows an exemplary schematic of a mold insert including a plurality of microstructures formed thereon, useful within the scope of the present disclosure. One example insert can include the plurality of microstructures shown in FIG. 2, wherein a metal insert can provide improved replication of the plurality of microstructures. That is, producing precise replication of the plurality of microstructures on the surface of a glass insert can prove too challenging, and thus a metal insert is used instead. The plurality of microstructures can be used to mold, for example, diffusive microstructures and Fresnel structures. In a useful scope, the plurality of microstructures themselves can be formed via diamond turning onto the metal insert plated with, for example, nickel-phosphorous (NiP). Additionally, the plurality of microstructures can be disposed on either the concave or convex surface of the metal insert. The plurality of microstructures can be inverted microstructures of a desired final microstructure to be formed on the finished lens after molding. To this end, additional adjustments to the fabrication process can be implemented to minimize the introduction of weld line or center distortion defects due to the thermal conductivity of the metal insert, such as the metal insert including the plurality of microstructures formed in the NiP plating.

Microstructures may include microlenses or microlenslets or any other type of structure or elements having physical Z deformation/height between 0.1 $\mu$m to 50 $\mu$m and width/length between 0.5 $\mu$m to 1.5 mm. These structures preferably have periodical or pseudo periodical layout, but may also have randomized positions. The preferred layout for microstructures is a grid with constant grid step, honeycomb layout, multiple concentric rings, contiguous e.g. no space in between microstructures. These structures may provide optical wave front modification in intensity, curvature, or light deviation, where the intensity of wave front is configured such that structures may be absorptive and may locally absorb wave front intensity with a range from 0% to 100%, where the curvature is configured such that the structure may locally modify wave front curvature with a range of +/- 20Diopters, and light deviation is configured such that the structure may locally scatter light with angle ranging from +/- 1° to +/- 30°. A distance between structures may range from 0 (contiguous) to 3 times the structure in X and/or Y size (separate microstructures).

Described herein is a device and method to couple the use of a metal insert having the plurality of microstructures and a glass mold side having a smooth surface with optimized injection molding parameters to produce defect-free prescription lenses.

In general, a combination of insert materials, cavity geometry, and polymer properties have an impact on the occurrence of defects. Specifically, for insert materials the "thermal conductivity" is important; for geometry the "gate design", "cavity shape" and "injection compression" settings are important; and for polymer properties the rheological characteristics of the polymer melt is important.

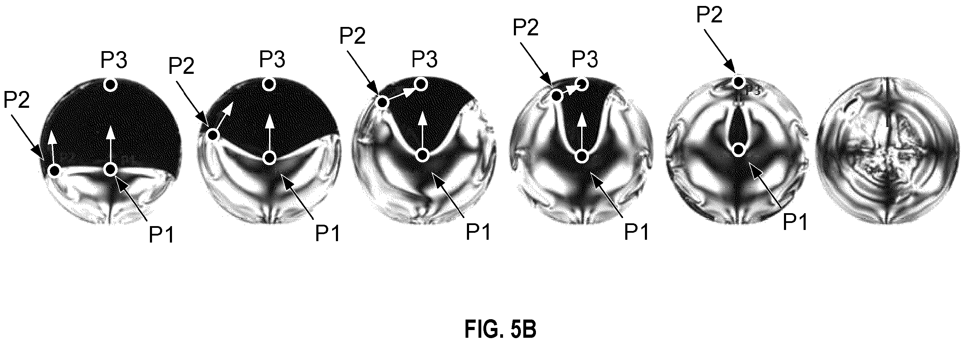

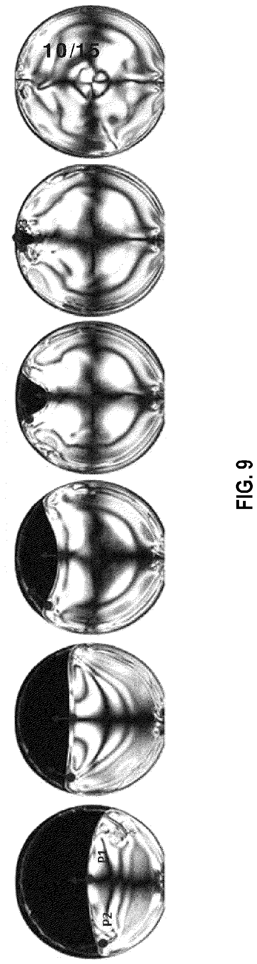

In regards to cavity geometry, there will not be a weld line formed if the first point and the second point (and any other points) along the melt front meet at the same time. That is, if the first point (P1) (see FIG. 5B and 9) reaches a third point (P3) opposite a gate at the same time as the second point (P2) takes to reach the third point (P3), then the weld line defect will not occur. This time difference (t1 - t2) can be conceptualized by dividing the distance the point in question has traveled by its velocity. In a useful scope, the Poiseuille equation for velocity can be used and rearranged to isolate critical ratios with the subscript number denoting either the first (central) point (P1) or the second (outer) point (P2):

$$(t_1 - t_2) = 8 \times \left( \frac{\Delta P_2}{\Delta P_1} \frac{H_2^2}{H_1^2} \frac{\mu_1}{\mu_2} \frac{\ell_1^2}{\ell_2^2} - 1 \right) \qquad (2)$$

Equation 2 can be used to help conceptualize the problem, but is not valid to precisely model the flow. This expression shows that the time ($t_1$) for the first (central) point (P1) to reach the third point (P3) is decreased relative to the time ($t_2$) the second point (P2) takes to reach the third point (P3) when the following ratios are minimized:

$$\text{Thickness Ratio} = \frac{H_2^2}{H_1^2}; \qquad (3)$$

$$\text{Viscosity Ratio} = \frac{\mu_1}{\mu_2}; \qquad (4)$$

$$\text{Pressure Drop ratio} = \frac{\Delta P_2}{\Delta P_1}; \qquad (5)$$

$$\text{Distance Traveled ratio} = \frac{\ell_1^2}{\ell_2^2}; \qquad (6)$$

The thickness ratio, and to a certain extent, the viscosity ratio, can be minimized with injection compression adjustments as the cavity is filled. The other two ratios, pressure drop and distance traveled can also be minimized by incorporating geometrical designs to the cavity.

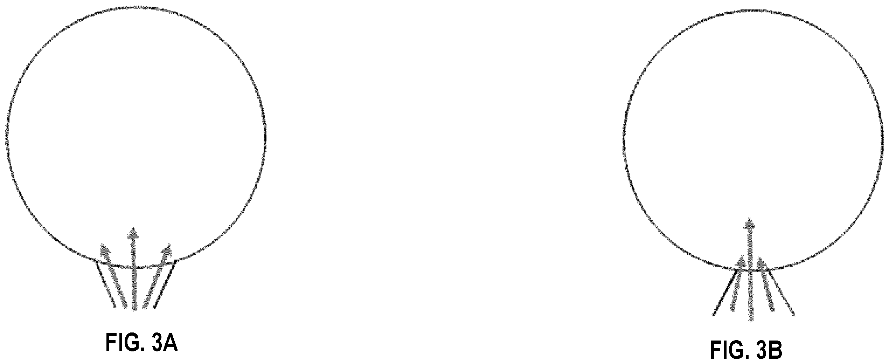

FIG. 3A shows an exemplary schematic of a mold cavity including a fan gate, useful within the scope of the present disclosure. FIG. 3B shows an exemplary schematic of a mold cavity including a narrow gate, useful within the scope of the present disclosure. In regards to the gate design, the gate design can minimize the pressure drop ratio by maximizing the pressure towards the center flow as compared to the circumferential perimeter flow. In a useful scope, this can be accomplished by optimizing the gate design to influence how the melt flows into the cavity. For example, the narrowing gate design of FIG. 3B can have such an effect compared to the fan gate design of FIG. 3A.

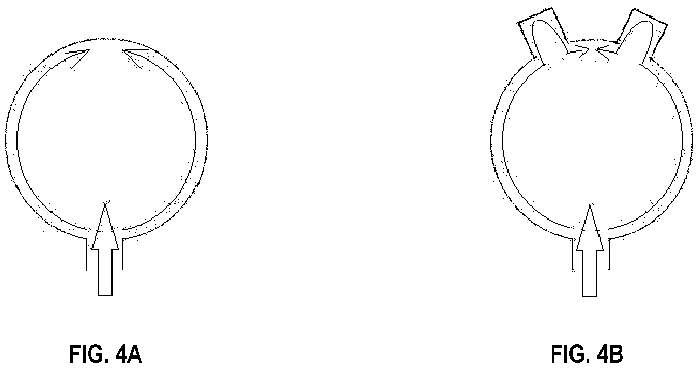

FIG. 4A shows an exemplary schematic of a mold cavity including no wells, useful within the scope of the present disclosure. FIG. 4B shows an exemplary schematic of a mold cavity including wells, useful within the scope of the present disclosure. In regards to cavity shape, a distance through a center of the cavity is shorter than a distance around the perimeter of the cavity. Any design to the cavity that further increases a path length around the perimeter will minimize the distance ratio even more. In a useful configuration, the wells added along the perimeter in FIG. 4B can have such an effect compared to FIG. 4A.

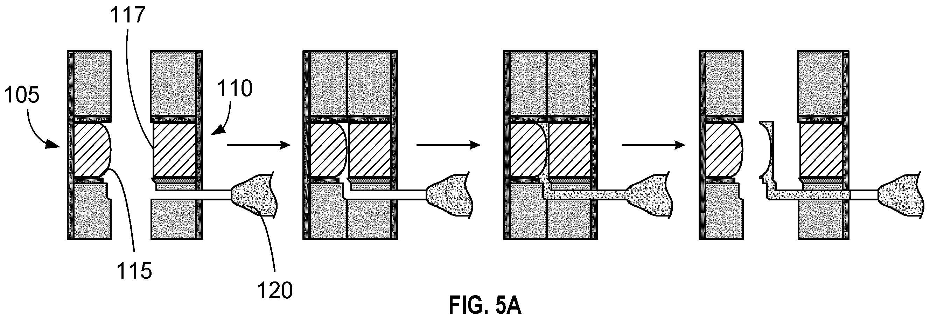

FIG. 5A shows an exemplary schematic of a straight injection molding process, useful within the scope of the present disclosure. In a useful scope, the mold device can include a first mold side 110 and a second mold side 105, a first mold insert 117 disposed on a surface of the first mold side 110, and a second mold insert 115 disposed on a surface of the second mold side 105. The first mold insert 117 can include a plurality of inverted microstructures 199 (see FIG. 2) formed thereon and the plurality of inverted microstructures 199 can be disposed according to a predetermined layout. The second mold insert 115 can have a smooth surface or similarly include the plurality of inverted microstructures 199 based on desired optical properties of a resulting lens. The plurality of inverted microstructures 199 can be configured to form a plurality of protruding microstructures on the resulting lens, such as those described in relation to FIG. 2. The first mold side 110 with the first mold insert 117 and the second mold side 105 with the second mold insert 115 can be configured to couple and move towards or away from one another, for example, using an alignment device. A polymer injector can be attached to the mold device and configured to inject a polymer melt 120.

In a useful scope, a thermal conductivity of the first mold insert 117 can be 5 to 1,500 $W \cdot m^{-1} \cdot K^{-1}$ at 25°C, and the thermal conductivity of the second mold insert 115 can be 0.01 to 2 $W \cdot m^{-1} \cdot K^{-1}$ at 25°C. For example, a material of the first mold insert 117 can be metal and a material of the second mold insert 115 can be glass. The present disclosure can apply to any combination of metal, glass and any other suitable matter as long as the thermal conductivity difference is found between the first and second mold sides.

As shown, the mold device can be open at the start of the straight injection process and subsequently closed. After, the polymer melt 120 can be injected by the polymer injector into a cavity of the mold device defined by the first mold side 110 with the first mold insert 117 and the second mold side 105 with the second mold insert 115. Subsequently, the polymer melt 120 is cooled and the mold device can be opened to remove the molded resulting lens. Notably, the process is a straight injection; that is, no additional compression of the polymer melt 120 occurs nor adjustment of the first mold insert 117 or the second mold insert 115 during injection or cooling.

As previously described, weld line and center distortion defects can occur during fabrication of a lens when a metal mold insert is used. FIG. 5B shows a series of optical images of the polymer melt 120 injected into the cavity of the mold device for the straight injection process, useful within the scope of the present disclosure. The first (central) point (PI), the second (outer) point (P2), and the third point (P3) are labeled. As shown in the last optical image of the series, a weld line defect is present.

To this end, an edge to center ratio (E:C) can be adjusted to help reduce the weld line defect occurrence. In a useful scope, the E:C ratio is the ratio of the lens cavity's circumferential perimeter edge thickness to the lens cavity's center thickness. This ratio can have an impact on the thickness ratio ($H_2^2/H_1^2$), but is not exactly the same because the value of $H_1$ and H2 depend on where their respective points are as the cavity of the mold device is filled. The E:C ratio is directly proportional to the thickness ratio and can therefore be used to explain weld line formation.

The E:C ratio remains constant as the lens cavity is filled for the straight injection method of FIG. 5A and 5B. For example, for a -6.0D lens with a center thickness of 1.4mm and edge thickness of 9.0 mm, the E:C ratio is approximately 41 (= $9^2/1.4^2$). This is a large ratio and can cause the thickness ratio to also be large, thus resulting in the large weld line formation expected for the straight injection method.

FIG. 5B also shows how the first (central) point (PI) stops as this flow front is cooled to a point where the viscosity greatly increases and movement does not occur. In addition to a high thickness ratio, the straight injection method with the cavity for the -6.0D lens also has a high viscosity ratio.

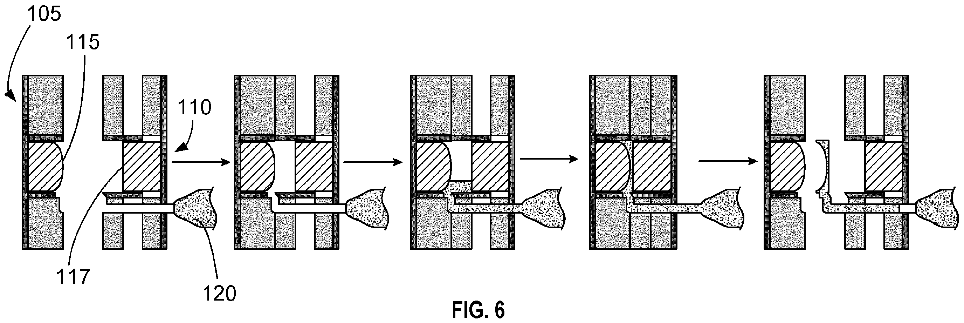

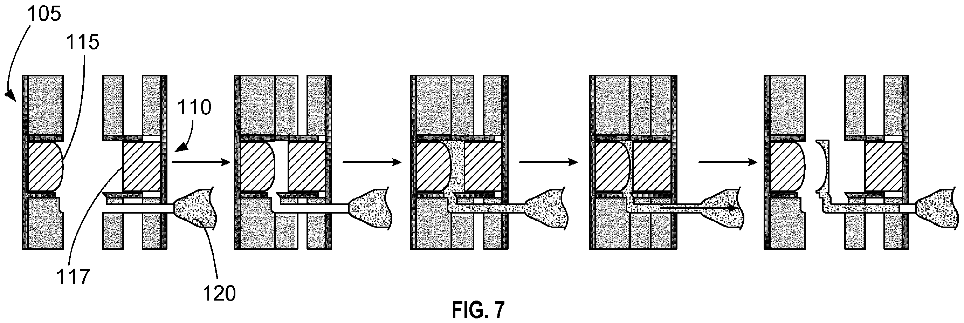

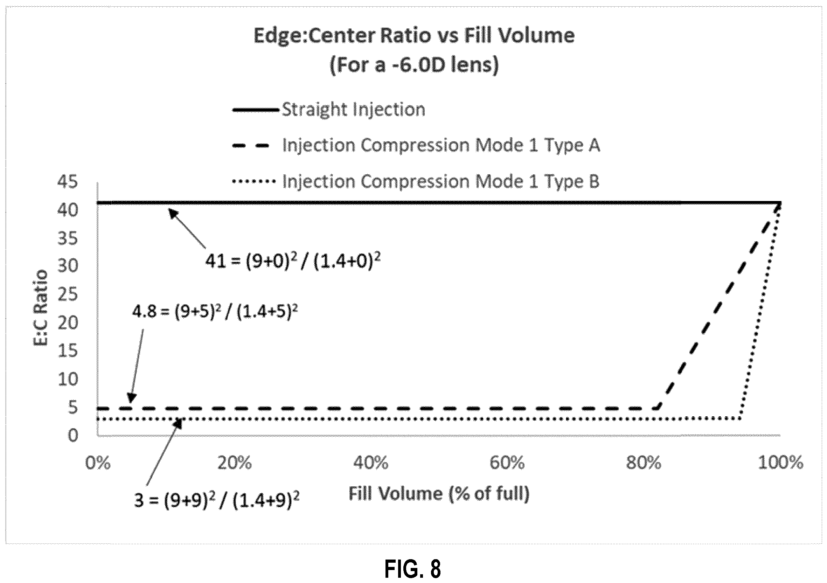

Thus, an injection molding method described herein can be used to further reduce the occurrence of weld line and center distortion defects by leveraging compression of the polymer melt 120 in the cavity. To this end, FIG. 6 shows an exemplary schematic of a first injection compression molding process, useful within the scope of the present disclosure. Additionally, FIG. 7 shows an exemplary schematic of a second injection compression molding process, useful within the scope of the present disclosure. Both the first injection compression molding process and the second injection compression molding process are methods used to reduce the thickness ratio. For example, the thickness ratio of less than 10 is maintained during the step of injecting the first predetermined volume of the polymer melt into the cavity. For the first injection compression molding process, the E:C ratio is not constant with a fill volume of the injected polymer melt 120 in the cavity. The initial ratio is based on a first predetermined gap between the first mold insert 117 and the second mold insert 115. The E:C ratio as the first predetermined gap closes (i.e. as the first mold insert 117 and the second mold insert 115 come closer together) can be based on the rate at which the first predetermined gap closes (i.e. a predetermined closing rate) as well as the fill volume as the first predetermined gap closes. This is illustrated in FIG. 8.

Referring to FIG. 6, the first injection compression molding process can include a myriad of steps to reduce weld line defects. In a useful scope, the mold device can be open at the start and subsequently closed. As compared to the straight injection process, the first mold insert 117 and the second mold insert 115 can be moved closer together until reaching the first predetermined gap between the first mold side 110 with the first mold insert 117 and the second mold side 105 with the second mold insert 115. After, the polymer melt 120 can be injected into the cavity of the mold device. As compared to the straight injection process, the cavity can be filled to less than or near a final volume of the resulting lens. That is, the cavity can be only partially filled with the polymer melt 120. Subsequently, the first predetermined gap can be closed by closing the first mold side 110 with the first mold insert 117 and the second mold side 105 with the second mold insert 115 at the predetermined closing rate. For example, the first predetermined gap can be closed upon an injected first predetermined volume of the polymer melt 120 reaching 90% or greater, or 94% or greater, of the final volume of the resulting lens. For example, a maximum of the predetermined closing rate can be 15 mm/s or greater, or 18 mm/s or greater, or 20 mm/s or greater. In a useful scope, additional injection of the polymer melt 120 into the cavity can occur while closing or after closing. Upon cooling of the polymer melt 120 in the cavity to form the lens, the mold device can be opened and the lens can be removed.

Referring to FIG. 7, the second injection compression molding process can include a myriad of steps to reduce weld line defects. In a useful scope, the mold device can be open at the start and subsequently closed. Again, the first mold side 110 with the first mold insert 117 and the second mold side 105 with the second mold insert 115 are moved closer together until reaching the first predetermined gap between the first mold side 110 with the first mold insert 117 and the second mold side 105 with the second mold insert 115. After, the polymer melt 120 can be injected into the cavity of the mold device. As compared to the straight injection process or the first injection compression molding process, the cavity can be filled with a volume of the polymer melt 120 exceeding the final volume of the resulting lens. Subsequently, the first predetermined gap can be closed by closing the first mold side 110 with the first mold insert 117 and the second mold side 105 with the second mold insert 115 at the predetermined closing rate to reduce the cavity to the final volume of the resulting lens. For example, the first predetermined gap can be closed upon the injected first predetermined volume of the polymer melt 120 reaching 101% or greater, or 105% or greater, of the final volume of the resulting lens. For example, the maximum of the predetermined closing rate can be 15 mm/s or greater, or 18 mm/s or greater, or 20 mm/s or greater. In a useful scope, excess injected polymer melt 120 can be expelled from the cavity. For example, the excess material can be pushed back through connecting channels (gate, runner and sprue) and into the polymer injector until the desired volume and thickness is achieved. In another example, the excess injected polymer melt 120 can egress via an overflow orifice or into an overflow well located at an end of the cavity opposite to the gate. Notably, the closing of the first mold side 110 with the first mold insert 117 and the second mold side 105 with the second mold insert 115 can be stopped upon reaching a second predetermined gap, wherein the second predetermined gap is determined by the final volume of the resulting lens. Finally, the mold device can be opened and the resulting lens can be removed.

EXAMPLES

Example 1 - a -6.0D lens with a convex (Cx) radius of 62 mm, a concave (Cc) radius of 167 mm, and a final center thickness of 1.4 mm was produced in a mold having a gate including a 15° fan angle and a 72 mm cavity diameter.

FIG. 8 shows a graph of the E:C ratio as a function of the fill volume, useful within the scope of the present disclosure. FIG. 8 illustrates the E:C ratio versus the fill volume for the straight injection process compared to two different settings of the first injection compression molding process, denoted as "Type A" and "Type B." The first mold insert 117 and the second mold insert 115 for Type A are separated by the first predetermined gap of 5 mm, and the first mold side 110 with the first mold insert 117 and the second mold side 105 with the second mold insert 115 close earlier and at a slower predetermined closing rate. The first mold insert 117 and the second mold insert 115 for Type B are separated by the first predetermined gap of 9 mm, and the first mold side 110 with the first mold insert 117 and the second mold side 105 with the second mold insert 115 close later and at a faster predetermined closing rate. Both are initialized to close at a fill volume that will cause the mold device to close at the same time the fill volume reaches 100%.

FIG. 9 shows a series of optical images of the polymer melt 120 injected into the cavity of the mold device for the first injection compression molding process, useful within the scope of the present disclosure. FIG. 8 demonstrates that the first injection compression molding process greatly reduces the E:C ratio throughout the filling cycle. Although the weld line formation is smaller for Type A of the first injection compression molding process, the ratio still approaches a high value towards 100% full and a weld line can still form to a certain extent as depicted in FIG. 9, but it is much improved. FIG. 9 illustrates that the first (central) point (PI) travels further not only because the thickness ratio is minimized, but also because the viscosity ratio is minimized. This is a result of the cavity being much thicker in the center when the first point (PI) travels past so that it does not freeze.

The second injection compression molding process can keep the E:C ratio lower even as the lens volume is completely filled. For the second injection compression molding process, the first predetermined gap is determined and the cavity is filled past 100% of the final volume of the resulting lens. The first mold side 110 with the first mold insert 117 and the second mold side 105 with the second mold insert 115 are closed and the excess volume of the polymer melt 120 is expelled.

Once formed, the weld line defect can potentially be fused together. The extent at which fusion takes place has an impact on visibility of the weld line. As mentioned previously, mold inserts made with a glass surface have very low thermal conductivity, which means the heat transfer is very slow. For glass, the rate is so slow that the interface at which the molten polymer contacts the surface is maintained at a temperature above the injected polymer's Tg for a short duration even when the set temperature of the mold side is below the injected polymer's Tg. This short duration can be long enough for the weld line to fuse together. However, for metal inserts, this interface is almost immediately quenched at or below the injected polymer's Tg because the thermal conductivity or rate of heat transfer from the hot molten polymer to the metal insert is very high. At this point, the molecular chains may not be mobile enough to sufficiently entangle and fully fuse.

Further, flowing behavior of the polymer melt 120 is strongly affected by its viscosity or melt flow rate (MFR). For example, polycarbonate (PC) with a low viscosity or high MFR can lessen the flow resistance at the thin center of a minus lens and thus reduce the extent of the weld line. In addition, using a high flow polycarbonate for the polymer melt 120 can result in lower residual stresses in the molded lenses, which could avoid part warpage, especially after a hard coating.

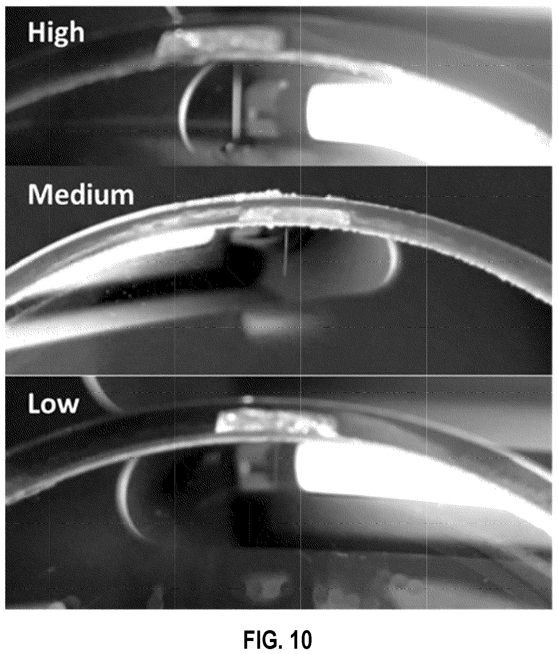

To this end, FIG. 10 shows optical images of weld line defect conditions, useful within the scope of the present disclosure. The weld line conditions were viewed in a controlled illumination setting and ranked according to (1) length, and (2) Low, Medium, or High intensity.

Table 1 - Examples for the first injection compression molding process

| Example | | 1 | 2 | 3 | 4 |
|---|---|---|---|---|---|
| Injection Mode | Mode | Straight Injection | IC Mode 1 | IC Mode 1 | IC Mode 1 |
| | Gap | Not Applicable | 5.0 mm | 5.0 mm | 8.5 mm |
| | Mold starts to close at (% of lens weight) | Not Applicable | 82% | 99% | 94% |
| | Predetermine closing rate (mm/s) | Not Applicable | 4 | 21 | 21 |
| Weld-line Visibility | | 23 mm High | 8.5 mm High | 5.5 mm Low | 4 mm Low |
| Following parameters were constant<br> - PC resin = MEP lupilon CLV1000<br> - Process temperatures<br> - Process Profile = Normal packing<br> - Cc insert = NiP plated steel<br> - Cx insert = glass bonded steel | | | | | |

Table 2 - Examples of polycarbonate resin grade

| Example | 6 | 12 | 13 |
|---|---|---|---|
| PC Resin Grade | MEP lupilon CLV 1000 | MEP lupilon CLS 2400 | MEP lupilon CLS 3400 |
| Weld-line Visibility | 4 mm Low | 4 mm Low | Not Visible |
| Following parameters were constant<br> - IC Model = same as Example 4<br> - Process temperatures<br> - Process Profile = Normal packing<br> - Cc insert = NiP plated steel<br> - Cx insert = glass bonded steel | | | |

Table 3 - Melt flow rate determination

| MEP lupilon Polycarbonate | MFR (ISO1183; 300°C; 1.2kg) | Temperature of deflection under load (ISO 075; at 1.80 Mpa) |
|---|---|---|
| CLV1000 | 7.9 g/10min | 131°C |
| CLS2400 | 10.0 g/10min | 129°C |
| CLS3400 | 15.0 g/10min | 124°C |

Table 4 - Examples of insert materials

| | | Process Profile = Delayed Packing | | Process Profile = Normal Packing | |
|---|---|---|---|---|---|
| | | Concave Insert | | Concave Insert | |
| | | NiP plated steel | Chrome | NiP plated steel | Chrome |
| Convex Insert | Chrome | 7.2 mm High | 7.6 mm High | 7.2 mm Low | 7.2 mm Low |
| | Glass | 5.2 mm Low | 5.2 mm Medium | 4.0 mm Low | 5.2 mm Low |
| Following parameters were constant | | | | | |

(continued)

| | Process Profile = Delayed Packing | | Process Profile = Normal Packing | |
|---|---|---|---|---|
| | Concave Insert | | Concave Insert | |
| | NiP plated steel | Chrome | NiP plated steel | Chrome |
| - PC resin = MEP lupilon CLV1000 | | | | |
| - Mold and polymer injector temperature | | | | |

Table 1 shows the weld line length and visibility to be reduced by maximizing the gap and clamp closing speed while also maximizing when the clamp starts to close relative to the amount of injected polymer. Table 2 and 3 show that the polymer resin's rheological properties such as melt flow rate have an impact on weld-line intensity. Specifically the extent of molecular chain entanglement as the weld-line fuses seems to be proportional to the melt flow rate. Table 4 shows NiP plating to improve weld-line length and intensity compared to a chrome surface for the first mold insert 117 because the thermal conductivity of NiP is lower than chrome.

Two different packing rates were tested: (1) Normal packing rate = packing phase characteristic by which after the cavity is 100% full by volume with molten plastic a majority of additional material needed to overcome shrinkage as the part cools is packed into the cavity within 5 seconds, and (2) Delayed packing rate = after the cavity is 100% full by volume with molten plastic a 20s delay is created before this majority of the material is packed into the cavity. Notably, for (1) normal packing rate, the center of the resulting lens has optical deformations and optics are out of specification for spherical power and cylinder. For (2) delayed packing rate, the center of the resulting lens is free of optical deformations and optics are within specification for spherical power and cylinder.

The packing step occurs immediately after the cavity is 100% full with the polymer melt 120. For example, the last image sequence in FIG. 9 depicts when the cavity is 100% full. After this point, the molten plastic will begin to shrink as it cools. To compensate for this shrinkage and provide a lens free of shrinkage related sink marks, the cavity can be filled with additional material for a certain amount of time. This phase is called the packing step. The rate of packing has been found to be an important process parameter when molding stock lenses with higher minus power using metal inserts. If the packing rate is too fast, then optical deformations can occur at the center of the lens. These deformations cause the optics in the center of the lens to be off.

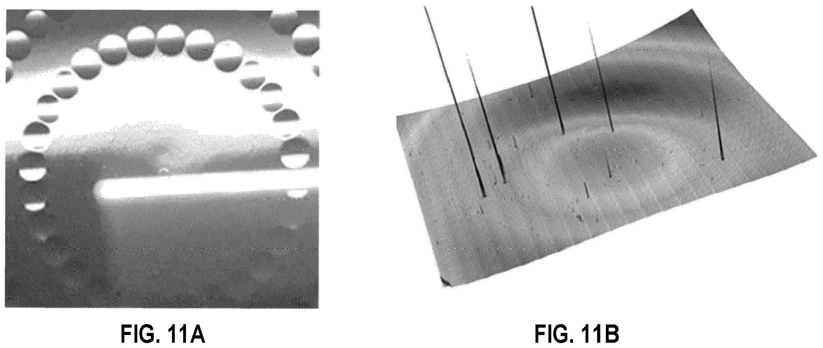

FIG. 11A shows an optical image of a center of a lens produced with a normal packing rate, useful within the scope of the present disclosure. As shown, optical deformations are present. FIG. 11B shows a Keyence microscopy image of the center of the lens of FIG. 11A, useful within the scope of the present disclosure. Again, the center shows optical deformations.

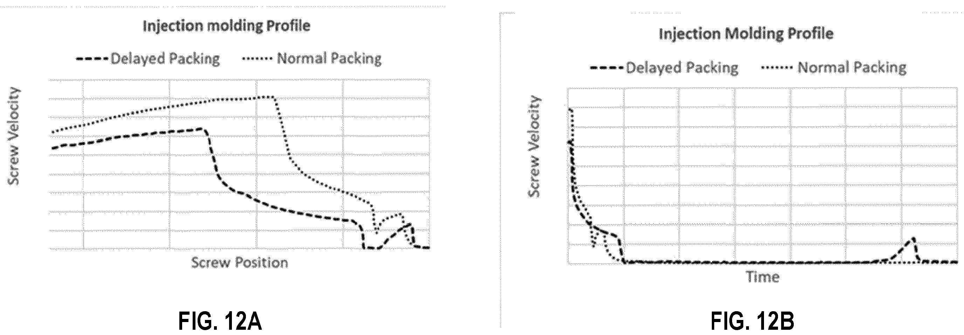

FIG. 12A shows a graph of a velocity profile of a screw in the polymer injector as a function of the screw position, useful within the scope of the present disclosure. FIG. 12B shows a graph of the velocity profile for the same injection cycle as FIG. 12A as a function of time, useful within the scope of the present disclosure. As can be seen in FIG. 12A, the screw velocity is lower overall and especially during the packing phase for the delayed packing as compared to the normal packing.

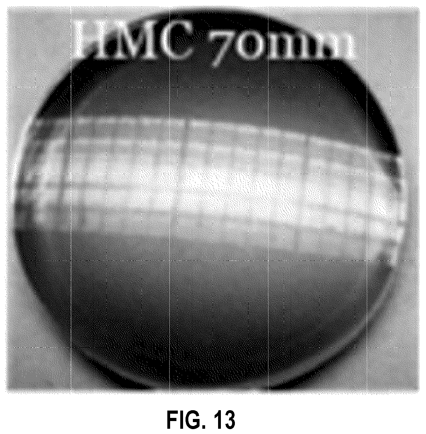

Lastly, FIG. 13 shows an optical image of a lens having good (low) distortion, useful within the scope of the present disclosure. Notably, the low distortion lens of FIG. 13 was produced using methods described herein.

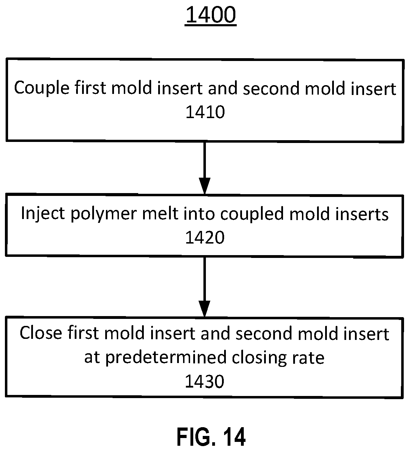

FIG. 14 is an exemplary flow chart for a method of forming a lens, useful within the scope of the present disclosure. In step 1410, the first mold side 110 with the first mold insert 117 and the second mold side 105 with the second mold insert 115 are coupled to define the cavity. For example, the first mold insert 117 and the second mold insert 115 can be separated by the first predetermined gap of 5 mm, or 7 mm, or 9 mm. In step 1420, the polymer melt 120 is injected into the cavity. For example, the injected polymer melt 120 can be less than or equal to the final volume of the resulting lens, such as 94%, or 80% to 100%. For example, the injected polymer melt 120 can be greater than the final volume of the resulting lens, such as 101%, or 101% to 150% or more. In step 1430, the coupled first mold side 110 with the first mold insert 117 and the second mold side 105 with the second mold insert 115 are closed at the predetermined closing rate. For example, the predetermined closing rate can be greater than 15 mm/s, or greater than 17 mm/s, or greater than 20 mm/s.

In the preceding description, specific details have been set forth, such as a particular geometry of a processing system and descriptions of various components and processes used therein. It should be understood, however, that techniques herein may be practiced in other embodiments that depart from these specific details, and that such details are for purposes of explanation and not limitation. Embodiments disclosed herein have been described with reference to the accompanying drawings. Similarly, for purposes of explanation, specific numbers, materials, and configurations have been set forth in order to provide a thorough understanding. Nevertheless, embodiments may be practiced without such specific details. Components having substantially the same functional constructions are denoted by like reference characters, and thus any redundant descriptions may be omitted.

Various techniques have been described as multiple discrete operations to assist in understanding the various embodiments. The order of description should not be construed as to imply that these operations are necessarily order dependent. Indeed, these operations need not be performed in the order of presentation. Operations described may be performed in a different order than specifically described unless expressly indicated otherwise. Various additional operations may be performed and/or described operations may be omitted.

Those skilled in the art will also understand that there can be many variations made to the operations of the techniques explained above while still achieving the same objectives of the disclosure. Such variations are intended to be covered by the scope of this disclosure. As such, the foregoing descriptions of embodiments are not intended to be limiting. Rather, any limitations to embodiments are presented in the following claims.

Embodiments of the present disclosure may also be as set forth in the following parentheticals.

(1) A mold device, including: a mold including a first mold side (110) and a second mold side (105), the first mold side (110) including a first mold insert (117) disposed on a surface of the first mold side (110), the second mold side (105) including a second mold insert (115) disposed on a surface of the second mold side (105), the second mold insert (115) having a lower thermal conductivity than the first mold insert (117), the first mold insert (117) including a plurality of inverted microstructures (199) formed thereon, the plurality of inverted microstructures (199) disposed according to a predetermined layout, wherein a thermal conductivity of the first mold insert (117) is 5 to 1,500 $W \cdot m^{-1} \cdot K^{-1}$ at 25°C, and a thermal conductivity of the second mold insert (115) is 0.01 to 2 $W \cdot m^{-1} \cdot K^{-1}$ at 25°C.

(2) The mold device of (1), wherein the first mold insert (117) is a metal and the second mold insert (115) is glass.

(3) The mold device of either (1) or (2), further comprising processing circuitry configured to couple the first mold side (110) and the second mold side (105) to form a cavity defined by the first mold insert (117) and the second mold insert (115), the first mold insert (117) and the second mold insert (115) being separated by a first predetermined gap; inject a first predetermined volume of a polymer melt into the cavity; and close the first mold insert (117) and the second mold insert (115) at a predetermined closing rate.

(4) The mold device of (3), wherein the first predetermined volume is based on a percentage of a weight of a resulting lens, and the processing circuitry is further configured to inject greater than 100% of the resulting lens weight into the cavity.

(5) The mold device of either (3) or (4), wherein a maximum of the predetermined closing rate is greater than or equal to 15 mm/s, or 17 mm/s, or 20 mm/s.

(6) A molding method, including coupling a first mold side (110) of a mold and a second mold side (105) of the mold, the first mold side (110) including a first mold insert (117) disposed on a surface of the first mold side (110), the second mold side (105) including a second mold insert (115) disposed on a surface of the second mold side (105), the second mold insert (115) having a lower thermal conductivity than the first mold insert (117), the first mold insert (117) including a plurality of inverted microstructures (199) formed thereon, the plurality of inverted microstructures (199) disposed according to a predetermined layout, the first mold insert (117) and the second mold insert (115) forming a cavity when coupled, the first mold insert (117) and the second mold insert (115) being separated by a first predetermined gap; injecting a first predetermined volume of a polymer melt into the cavity; and closing the first mold insert (117) and the second mold insert (115) at a predetermined closing rate.

(7) The method of (6), wherein the predetermined closing rate is greater than or equal to 15 mm/s, or 17 mm/s, or 20 mm/s.

(8) The method of either (6) or (7), wherein a thickness ratio is a ratio of a cavity edge thickness to a cavity center thickness, and the thickness ratio of less than 10 is maintained during the step of injecting the first predetermined volume of the polymer melt into the cavity.

(9) The method of any one of (6) to (8), wherein the first predetermined volume is based on a percentage of a weight of a resulting lens, the percentage injected being equal to or less than 100% of the resulting lens weight.

(10) The method of any one of (6) to (9), wherein the first predetermined volume is based on a percentage of a weight of a resulting lens, the percentage injected being greater than 100% of a resulting lens weight.

(11) The method of (10), wherein an excess of the percentage of the injected polymer melt is expelled from the cavity.

(12) The method of any one of (6) to (11), wherein closing the first mold insert (117) and the second mold insert (115) further comprises closing the first mold insert (117) and the second mold insert (115) upon the injected first predetermined volume reaching 94% or greater of a resulting lens weight.

(13) The method of any one of (6) to (12), wherein closing the first mold insert (117) and the second mold insert (115) further comprises stopping the closing upon the first mold insert (117) and the second mold insert (115) being separated by a second predetermined gap.

(14) The method of any one of (6) to (13), wherein the first predetermined gap is greater than or equal to 9 mm, or 7 mm, or 5 mm.

(15) The method of any one of (6) to (13), wherein the first mold insert (117) is plated with nickel-phosphorous (NiP), the plurality of inverted microstructures (199) formed on the NiP plating.

**Claims**

1. A mold device, comprising:

   a mold including a first mold side (110) and a second mold side (105), the first mold side (110) including a first mold insert (117) disposed on a surface of the first mold side (110), the second mold side (105) including a second mold insert (115) disposed on a surface of the second mold side (105), the second mold insert (115) having a lower thermal conductivity than the first mold insert (117), the first mold insert (117) including a plurality of inverted microstructures (199) formed thereon, the plurality of inverted microstructures (199) disposed according to a predetermined layout, wherein
   a thermal conductivity of the first mold insert (117) is 5 to 1,500 $W \cdot m^{-1} \cdot K^{-1}$ at 25°C, and
   a thermal conductivity of the second mold insert (115) is 0.01 to 2 $W \cdot m^{-1} \cdot K^{-1}$ at 25°C.

2. The mold device of claim 1, wherein the first mold insert (117) is a metal and the second mold insert (115) is glass.

3. The mold device of claim 1, further comprising processing circuitry configured to
   couple the first mold side (110) and the second mold side (105) to form a cavity defined by the first mold insert (117) and the second mold insert (115), the first mold insert (117) and the second mold insert (115) being separated by a first predetermined gap;
   inject a first predetermined volume of a polymer melt into the cavity; and
   close the first mold insert (117) and the second mold insert (115) at a predetermined closing rate.

4. The mold device of claim 3, wherein the first predetermined volume is based on a percentage of a weight of a resulting lens, and the processing circuitry is further configured to inject greater than 100% of the resulting lens weight into the cavity.

5. The mold device of claim 3, wherein a maximum of the predetermined closing rate is greater than or equal to 20 mm/s.

6. A molding method, comprising:

   coupling a first mold side (110) of a mold and a second mold side (105) of the mold, the first mold side (110) including a first mold insert (117) disposed on a surface of the first mold side (110), the second mold side (105) including a second mold insert (115) disposed on a surface of the second mold side (105), the second mold insert (115) having a lower thermal conductivity than the first mold insert (117), the first mold insert (117) including a plurality of inverted microstructures (199) formed thereon, the plurality of inverted microstructures (199) disposed according to a predetermined layout, the first mold insert (117) and the second mold insert (115) forming a cavity when coupled, the first mold insert (117) and the second mold insert (115) being separated by a first predetermined gap;
   injecting a first predetermined volume of a polymer melt into the cavity; and
   closing the first mold insert (117) and the second mold insert (115) at a predetermined closing rate.

7. The method of claim 6, wherein a maximum of the predetermined closing rate is greater than or equal to 20 mm/s.

8. The method of claim 6, wherein
   a thickness ratio is a ratio of a cavity edge thickness to a cavity center thickness, and
   the thickness ratio of less than 10 is maintained during the step of injecting the first predetermined volume of the polymer melt into the cavity.

9. The method of claim 6, wherein the first predetermined volume is based on a percentage of a weight of a resulting lens, the percentage injected being equal to or less than 100% of a resulting lens weight.

10. The method of claim 6, wherein the first predetermined volume is based on a percentage of a weight of a resulting lens, the percentage injected being greater than 100% of the resulting lens weight.

11. The method of claim 10, wherein an excess of the percentage of the injected polymer melt is expelled from the cavity.

**12.** The method of claim 6, wherein closing the first mold insert (117) and the second mold insert (115) further comprises closing the first mold insert (117) and the second mold insert (117) upon the injected first predetermined volume reaching 94% or greater of a resulting lens weight.

**13.** The method of claim 6, wherein closing the first mold insert (117) and the second mold insert (115) further comprises stopping the closing upon the first mold insert (117) and the second mold insert (117) being separated by a second predetermined gap.

**14.** The method of claim 6, wherein the first predetermined gap is greater than or equal to 5 mm.

**15.** The method of claim 6, wherein the first mold insert (117) is plated with nickel-phosphorous (NiP), the plurality of inverted microstructures (199) formed on the NiP plating.

Center

Edge

FIG. 1

199

FIG. 2

FIG. 3B

FIG. 3A

FIG. 4B

FIG. 4A

FIG. 5A

FIG. 5B

EP 4 091 790 A1

FIG. 6

FIG. 7

FIG. 8

FIG. 9

FIG. 10

FIG. 11B

FIG. 11A

Injection Molding Profile

‑ ‑ ‑ Delayed Packing    ⋯⋯⋯ Normal Packing

Screw Velocity

Time

**FIG. 12B**

Injection molding Profile

‑ ‑ ‑ Delayed Packing    ⋯⋯⋯ Normal Packing

Screw Velocity

Screw Position

**FIG. 12A**

FIG. 13

## 1400

```
┌─────────────────────────────────────────────┐
│  Couple first mold insert and second mold insert │
│                      1410                     │
└─────────────────────────────────────────────┘
                        │
                        ▼
┌─────────────────────────────────────────────┐
│  Inject polymer melt into coupled mold inserts │
│                      1420                     │
└─────────────────────────────────────────────┘
                        │
                        ▼
┌─────────────────────────────────────────────┐
│  Close first mold insert and second mold insert │
│        at predetermined closing rate          │
│                      1430                     │
└─────────────────────────────────────────────┘
```

FIG. 14

Europäisches
Patentamt

European
Patent Office

Office européen
des brevets

## EUROPEAN SEARCH REPORT

Application Number

EP 21 30 5650

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 730 270 A1 (HOYA LENS THAILAND LTD [TH]) 28 October 2020 (2020-10-28) | 1-3,6 | INV. B29C45/26 |
| Y | * abstract * * figures 1-6b * * paragraphs [0029] - [0039], [0073] * | 4,5,7-15 | B29C45/56 B29D11/00 |
| Y | US 2019/389160 A1 (CHIU HAO-WEN [US] ET AL) 26 December 2019 (2019-12-26) | 4,5,7-14 | |
| A | * abstract * * paragraphs [0004] - [0014], [0046] - [0048] * | 1-3,6,15 | |
| A | US 2019/389159 A1 (CHIU HAO-WEN [US] ET AL) 26 December 2019 (2019-12-26) * abstract * * paragraphs [0004] - [0009], [0037] - [0039] * | 1-15 | |
| Y | EP 3 730 269 A1 (HOYA LENS THAILAND LTD [TH]) 28 October 2020 (2020-10-28) | 15 | |
| A | * abstract * * figures 1-5 * * paragraphs [0024] - [0037] * | 1-14 | **TECHNICAL FIELDS SEARCHED (IPC)** |
| A | US 5 415 817 A (SHIAO PO-LING [TW] ET AL) 16 May 1995 (1995-05-16) * abstract * * figures 1-4 * | 1-15 | B29C B29D B29L |

The present search report has been drawn up for all claims

| Place of search | Date of completion of the search | Examiner |
|---|---|---|
| The Hague | 2 November 2021 | Heckmann, Paul |

EPO FORM 1503 03.82 (P04C01)

## ANNEX TO THE EUROPEAN SEARCH REPORT
## ON EUROPEAN PATENT APPLICATION NO.

EP 21 30 5650

This annex lists the patent family members relating to the patent documents cited in the above-mentioned European search report.
The members are as contained in the European Patent Office EDP file on
The European Patent Office is in no way liable for these particulars which are merely given for the purpose of information.

02-11-2021

| Patent document cited in search report | | Publication date | Patent family member(s) | | Publication date |
|---|---|---|---|---|---|
| EP 3730270 | A1 | 28-10-2020 | CN | 111511515 A | 07-08-2020 |
| | | | CN | 112659601 A | 16-04-2021 |
| | | | EP | 3730270 A1 | 28-10-2020 |
| | | | JP | WO2019124353 A1 | 12-02-2021 |
| | | | WO | 2019124353 A1 | 27-06-2019 |
| US 2019389160 | A1 | 26-12-2019 | BR | 112019015261 A2 | 14-04-2020 |
| | | | CN | 110225817 A | 10-09-2019 |
| | | | EP | 3354449 A1 | 01-08-2018 |
| | | | US | 2019389160 A1 | 26-12-2019 |
| | | | WO | 2018138287 A1 | 02-08-2018 |
| US 2019389159 | A1 | 26-12-2019 | BR | 112019015010 A2 | 07-04-2020 |
| | | | CN | 110225810 A | 10-09-2019 |
| | | | EP | 3354439 A1 | 01-08-2018 |
| | | | US | 2019389159 A1 | 26-12-2019 |
| | | | WO | 2018138285 A1 | 02-08-2018 |
| EP 3730269 | A1 | 28-10-2020 | CN | 111629876 A | 04-09-2020 |
| | | | EP | 3730269 A1 | 28-10-2020 |
| | | | JP | WO2019124354 A1 | 25-02-2021 |
| | | | WO | 2019124354 A1 | 27-06-2019 |
| US 5415817 | A | 16-05-1995 | NONE | | |

EPO FORM P0459

For more details about this annex : see Official Journal of the European Patent Office, No. 12/82